# EUROPEAN PATENT SPECIFICATION

(11) **EP 0 907 835 B1**
(45) Date of publication and mention of the grant of the patent: **26.05.2004**
(21) Application number: 97929410.5
(22) Date of filing: 02.07.1997
(51) Int. Cl.: F16B 5/04

(54) **SELF-PIERCING RIVETING**
SELBSTBOHRENDE NIETE
RIVETAGE AVEC PER AGE SIMULTANE

(30) Priority: 04.07.1996 GB 9614001
(43) Date of publication of application: 14.04.1999
(60) Divisional application: 03255122.8
(73) Proprietor: TEXTRON FASTENING SYSTEMS LIMITED, Welwyn Garden City, Hertfordshire AL7 1EZ (GB)
(72) Inventor: DENHAM, Keith, Welwyn Garden City Herts AL7 1SR (GB)
(74) Representative: Coates, Ian Harold
(86) International application number: PCT/GB1997/001774
(87) International publication number: WO 1998/001679

(56) References cited:
- WO-A-93/10925
- WO-A-95/35174
- GB-A- 1 378 504

## Description

### Field of the Invention

The present invention relates to self-piercing riveting. It is particularly, but not exclusively, applicable to a method and apparatus for joining workpieces using rivets which have a reduced strength difference between the rivet and the materials being joined, and is specifically applicable to the use of rivets of the same composition as the workpieces.

### Background to the Invention

Self-piercing is a method of riveting in which no aperture is pre-formed in any of the workpieces to be riveted together, the rivet itself penetrating at least the nearest workpiece component. Usually it is arranged that the rivet does not penetrate the most remote workpiece, so that the resulting riveted joint is inherently sealed against the passage of gas or liquids.

Self-piercing riveting has been developed as an alternative to spot welding and as such offers certain advantages. A number of such self-piercing riveting systems are commercially available for example under the Trade Marks FASTRIV and HENROB. Such systems are described in the patent literature, for example in WO93/10925 (HENROB), WO94/14554 (HENROB) and US4,615,475 (NEITEK). This is the closest prior art known to the Applicant and the reader is referred to these documents for a general description of this method and its advantages over spot welding.

These prior art systems share certain common features. First, they utilise a rivet which has a pre-formed head, and this head has to be accommodated within the die of the placing apparatus.

Secondly, existing methods do not give consistently reliable results unless the rivets are substantially stronger than the component to be joined. Importantly, since this method is often used with relatively hard aluminium alloy workpieces, there is a requirement to use rivets which are also of aluminium alloy. This would avoid any tendency towards chemical or galvanic corrosion or the like and would simplify the recovery of the aluminium alloy material for recycling. However, this requirement cannot currently be satisfied, since there is no sufficiently stronger aluminium alloy available for the rivet.
GB-A-1378504 discloses riveting apparatus in which the rivet passes completely through the workpiece, an enlarged head being formed outside each face of the workpiece, the sides of the rivet being constrained radially where the rivet enters the workpiece.

It is the object of the present invention to overcome or mitigate one or more of the disadvantages outlined above.

### Summary of the Invention

According to the first aspect of the present invention, in its broadest sense, there is provided a method of self-piercing riveting comprising inserting a self-piercing rivet into a workpiece consisting of at least two layers of overlapping material such that the end of the rivet is deformed during the riveting process and remains encased in the material furthest from the point of impact of the rivet, characterised in that during at least the part of the riveting process when the rivet initially enters the workpiece, the sides of the rivet are constrained against radially outward deformation in the region where the rivet enters the workpiece.

By supporting the external shank of the rivet as it enters the workpiece the rivet material no longer has to be substantially stronger than the workplace. For the first time a reliable method is available for using aluminium alloy rivets for joining relatively hard aluminium alloy workpieces.

Preferably the constraint against radially outward deformation extends away from the workpiece for substantially the complete length of the rivet.

By selecting a headless rivet the entire shank of the rivet can be supported, thus avoiding any tendency for the rivet to deform outwardly before it enters the workpiece.

Preferably the constraint is removed after the rivet has at least partially entered the workpiece, thereby allowing radially outward deformation of a portion of the rivet to form a rivet head.

In this manner a head is formed automatically as the rivet is driven home.

Preferably the aforesaid rivet head is so formed that it does not substantially project above the surface of the workpiece.

In a further embodiment the constraint against radially outward deformation is maintained in place until the rivet is entirely within the workpiece, such that the deformation of the rivet which inevitably takes place in such a riveting process results in radially outward deformation of a portion of the rivet to form a head within the layer of material first penetrated by the rivet.

Because it is now possible to constrain the rivet from deforming until it has entered the workpiece, it is possible to form an enlarged head within the workpiece rather than in a countersunk region on its outer surface.

In a particularly preferred embodiment, the rivet comprises a cylindrical slug of material, the sides of the cylinder being parallel along substantially the entire length of the rivet.

The rivets can thus be formed simply by cropping pieces off the end of a length of wire, resulting in significant cost savings.

In an alternative embodiment, the rivet comprises a semi-tubular slug incorporating a bore with a tapered outer end at the end of the rivet intended to penetrate the workpiece.

Preferably, the rivet comprises a semi-tubular slug incorporating at both ends a bore with a tapered outer end, thus obviating the need to orientate the rivet with respect to the workpiece prior to deformation.

A tapered end provides a piercing region to ease penetration of the workpiece. By making the rivet symmetrical this eliminates the need to orientate the rivet during presentation to the riveting head.

Preferably, the method comprises the additional step of forming rivets immediately prior to use by repeatedly cropping the tip off a length of wire.

By forming the rivets as required, as part of a single riveting operating, considerable savings can be made in cost, time and operational simplicity.

Preferably, the constraint provides both a force resisting radially outward deformation of the rivet but also exerts a force to clamp the workpiece in place.

Where an anvil and die arrangement are used, this can also clamp the components of the workpiece together.

In a further aspect of the present invention, in its broadest sense, there is further provided apparatus for performing the above self-piercing method comprising:
(i) an anvil having a generally annular cavity opening towards the workpiece and arranged in use to deform the rivet during the riveting process so that the rivet remains encased in the material of workpiece furthest from the point of impact;
(ii) a die incorporating a channel adapted to convey a rivet to the workpiece;
(iii) a punch adapted to drive the rivet into the workpiece;
(iv) constraining means adapted in use to prevent radially outward deformation of the rivet as the rivet enters the workpiece and comprising moveable heads (30, 31) adapted to encircle the shank of the rivet as it enters the workpiece, the heads being interposed between the die (33) and the workpiece and being moveable away from the shank.

in a particularly preferred embodiment the sides of the channel in the die provide the desired constraint against radially outward deformation.

Thus by adapting the die to provide the necessary support for the rivet as it enters the workpiece existing apparatus can be modified to perform the new method.

Where it is required to use headed rivets this prevents the use of a straight-sided die. However, since constraint is required primarily where the rivet enters the workpiece this can be provided by one or more heads which move up to and away from the rivet as required.

Preferably the apparatus comprises a cropping mechanism adapted to form rivet slugs by repeatedly cropping the end of a piece of wire.

Preferably the anvil and the die in combination are adapted to clamp the workpieces during the riveting process.

Preferably the upper piece(s) of the workpieces to be joined are pierced by a self-piercing rivet as claimed herein and the bottom or lower most-in-use workpiece receives the piercing region of the rivet and wherein the piercing region is splayed radially outwards.

Preferably the upper components) are pierced by a self piercing rivet, said rivet incorporating a piercing region at the end of the rivet shank, and the bottom component receives the piercing region in widened form, wherein the piercing region is radially widened within the bottom component to form a riveted joint.

### Brief Description of the Drawings

Aspects of the present invention will now be more particularly described by way of example only and with reference to the accompanying drawings in which:-
Figures 1 to 5 are sectional side views illustrating diagrammatically the sequential steps in a method of self-piercing riveting according to a first embodiment of the invention;
Figures 6 to 9 are sectional side views of the sequential steps in a method of self-piercing riveting according to a second embodiment of the invention;
Figures 10 and 11 are sectional side views showing the additional step of forming a rivet by wire cropping and introducing the rivet thus formed into a die;
Figures 12 and 13 are sectional views illustrating the initial sequential steps of a method of self-piercing riveting using a headed rivet;
Figures 14 to 16 illustrate side cross-sections through three types of self-piercing rivets applicable to the present invention;
Figures 17 to 20 are sectional side views of the sequential steps in a method of self-piercing riveting according to a fourth embodiment of the invention.

### Description of the Preferred Embodiment

The present embodiments represent currently the best ways known to the Applicant of putting the invention into practice. But they are not the only ways in which this could be achieved. They are illustrated, and they will now be described by way of example only.

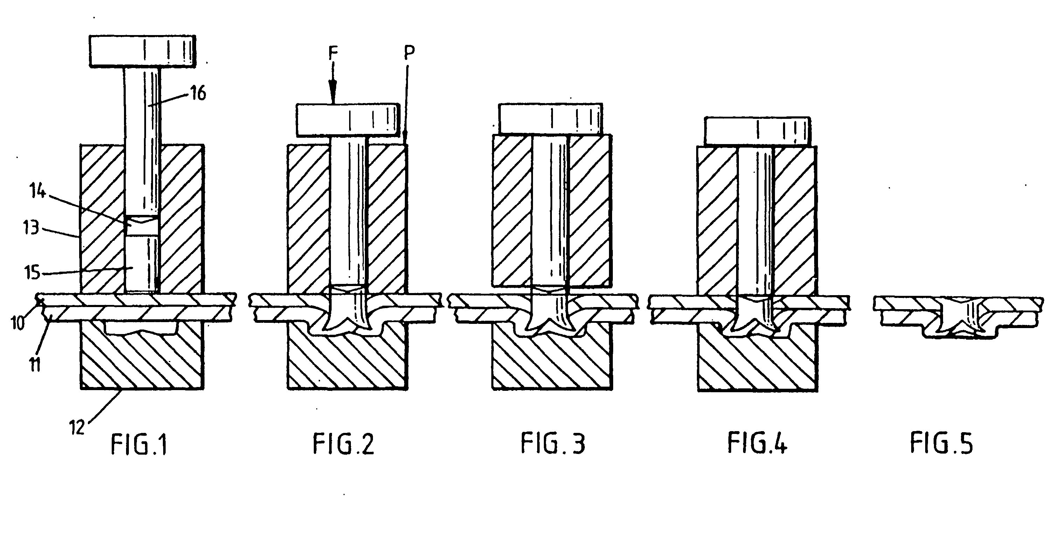

Figures 1 to 5 illustrate the sequential steps in carrying out a first embodiment of a self-piercing riveting method. The panels or components 10,11 to be joined together are supported between an anvil 12 and a die 13. The die incorporates a straight-sided channel 14 which is a tight sliding fit for a rivet 15 and a punch 16.

The die and anvil clamp the two panels together to form a workpiece. The clamping force can be due to upward pressure from the anvil or, as shown in Figure 2, downward pressure P by the die 13.

In this context a workpiece consists of any number of components which are intended to be riveted together.

The anvil incorporates an annular cavity which allows a fixed amount of deformation of the workpiece and also causes the rivet to splay outwards as will be described below.

Referring now in detail to the sequence shown in Figures 1 to 5, in Figure 2 a downward compressive force P is applied to the sheets by the die. Force F is then applied to the punch causing the rivet to pierce into the sheets and the end of the rivet to splay outwards by reacting against the anvil. At this stage there is sufficient volume of rivet left projecting above the top sheet to form the eventual rivet head.

in Figure 3, the die is withdrawn until the bottom of the die is level with the end of the punch. This leaves the remaining sides of the rivet projecting above the workpiece unsupported and unconstrained. The punch and die then move downwards in unison as shown in Figure 4 and upset the projecting end of the rivet to form a head. The head can be flush with the workpiece as shown or protruding depending on the design requirements.

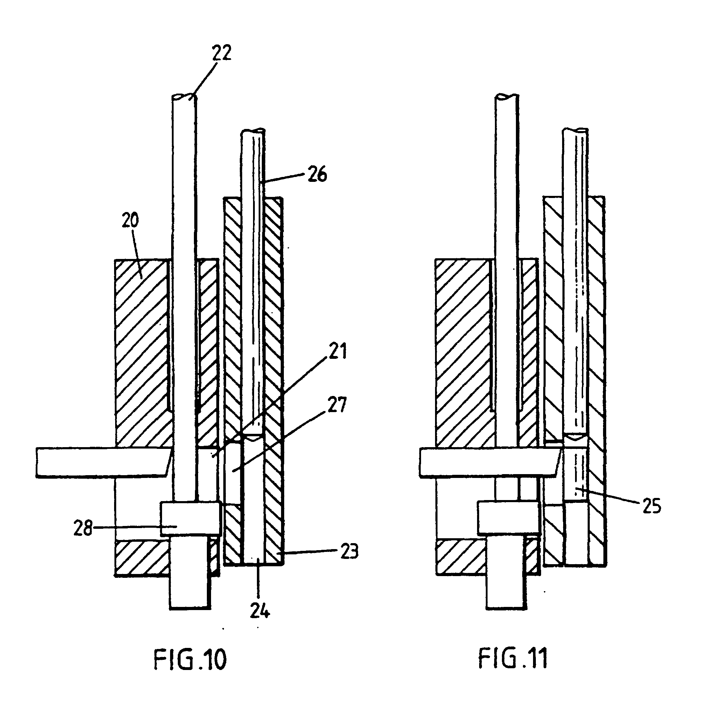

Certain aspects and advantages of the invention will immediately become apparent. Firstly, the rivets consist of straight-sided slugs of material. There is no need to pre-form a rivet head. In their simplest form the rivets can be formed by simply repeatedly cropping the end of a length of wire (see reference below to Figures 10 and 11). Secondly, the internal dimensions of the channel 14 in the die correspond substantially exactly to the external dimensions of the rivet. Since the die is manufactured from material of great strength it provides a constraint against the inevitable tendency to radially outward deformation of the rivet when force F is applied. It thus acts to strengthen the rivet and the resuming effect is as if a rivet of much stronger material were being used. It is thus possible to join components together using rivets made of the same basic material (e.g. aluminium alloy) as the component parts, but having a reduced strength differential over the component material.

This method works well providing the die is kept in contact with the workpiece at least during the part of the riveting processing when the rivet starts to enter and penetrate the workpiece. Once both workpieces have been penetrated then the constraint can be removed in order for a head to be formed. The simplest way to remove this constraint is to lift at least a portion of the die away from the workpiece. It will be appreciated that the die could be in two-part form with an outer, clamping component, which always remains in contact with the workpiece (not shown) and an inner component which moves as illustrated in these figures.

By using the arrangement described in the foregoing example, a workpiece or component material of aluminium alloy grade 5251 in the H3 condition having a hardness of Hv 85 can be satisfactorily riveted with a self piercing rivet manufactured from aluminium alloy grade 7050 having a hardness of Hv 150.

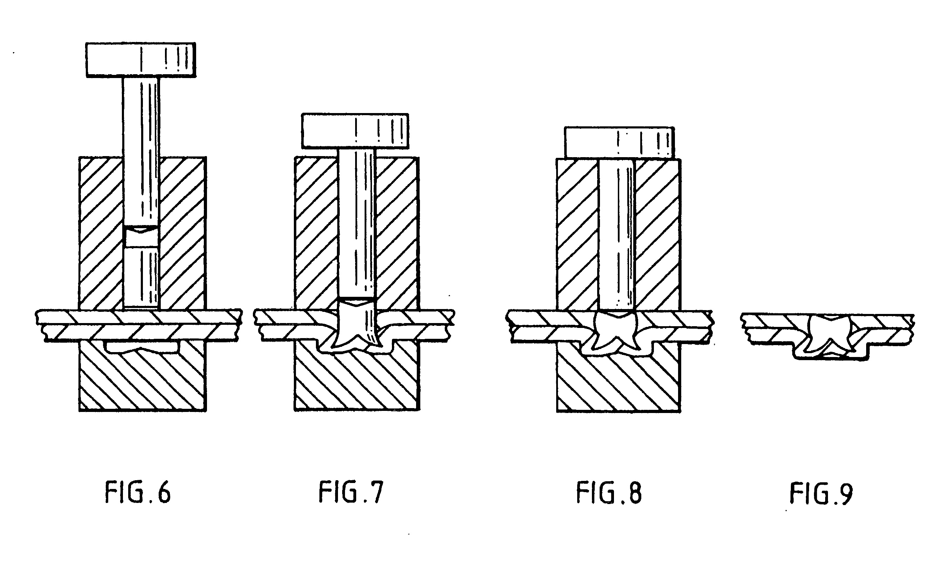

A further embodiment of this process is illustrated in Figures 6 to 9 inclusive. Figures 6 and 7 correspond to the steps shown in Figures 1 and 2. However, in Figure 8 the die is not withdrawn from the workpiece but instead continued pressure is applied by the punch 16. Continued forward movement of the punch causes expansion of the rivet sufficient for it to be securely engaged within the top panel. Where the rivet has comparable strength relative to the workpiece it has been discovered that the inevitable deformation takes place within the workpiece to form an embedded head rather than a countersunk head.

On many applications a sufficiently secure joint can be produced without the need for the rivet to have a fully formed head. This is particularly applicable where adhesives are the principal joining method and where a mechanical fixing is required to secure the component parts together until the adhesive is set.

Where a plain cylindrical rivet is used, the rivet can be produced at the riveting head by feeding wire into the head and cutting off the rivet by a cropping action and transferring the rivet into the die. This is illustrated in Figures 10 and 11.

A cutting block 20 is provided adjacent the rivet die 23 which contains an aperture 21 aligned with a corresponding aperture 27 in the die, enabling the rivet 25 to be fed directly into channel 24 as it is formed. Wire 22 is fed through the cutting block until it reaches a wire stop 28. The position of the wire stop in the cutting block is adjustable such that the length of the rivet can be adjusted to suit a variety of workpieces. This cropping technique is known per se but the sequential formation of rivets for feeding directly into an adjacent die has not previously been applied to this method. Whereas rivets in this type of apparatus and method are generally magazine or belt fed this embodiment avoids all the complexity of these earlier arrangements.

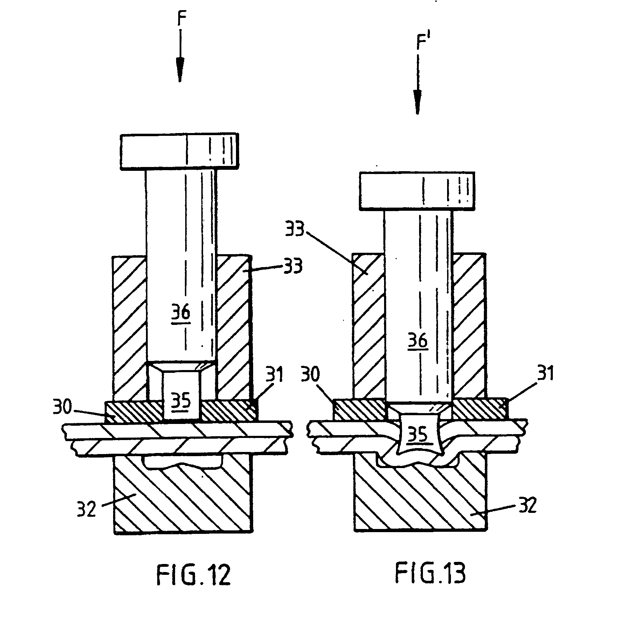

A third embodiment of the present invention is illustrated in Figures 12 and 13. There are occasions when it is preferable to use a rivet with a pre-formed head. It has been discovered that it is possible to use such rivets in these methods providing the shank of the rivet is constrained as it enters the workpiece. This can be achieved using the method illustrated in Figures 12 and 13. Moveable heads 30, 31 are interposed between the die 33 and the workpiece. The heads are shaped so that they conform to the circumference of the rivet as a tight sliding fit. The rivet 35 is then driven into the workpiece until the head of the rivet encounters the moveable heads 30, 31. The heads are then withdrawn and force F' is applied to the punch 36 to drive the rivet head into the workpiece.

In this example the heads move laterally in the plane of the workpiece. However, this is only one option and the heads could equally well move in an angled manner. The important feature is that the end of the die is adjustable in terms of the width of the rivet to provide both the necessary constraint and passage for the head of the rivet. Force F may or may not be equal to force F.

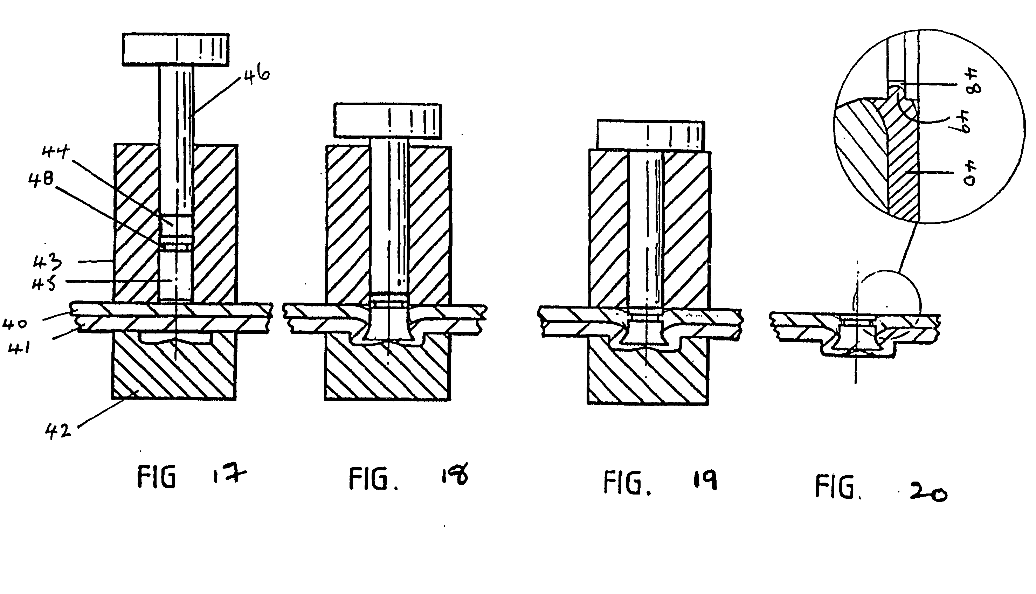

Figures 17 to 20 illustrate a further embodiment of the present invention. In this embodiment the shaft of the rivet contains a circumferential groove 48 near the trailing end of the rivet. The groove is preferably positioned such that it aligns with the sheet of material nearest to the die at the end of the riveting process. As the rivet is forced into the workpieces then material 49 from workpiece 40 is extruded into groove 48, gripping the rivet tightly in place and thus forming a stronger joint between the two workpieces.

In Figures 17 to 20 the groove 48 is shown as a circumferential channel. However, this is only one possible arrangement. For example, the so-called groove could consist of one or more indentations around the circumference of the rivet, each indentation being capable of accepting extruded material 49. It follows that the term "groove" has a broad meaning in this context and includes a depression of any shape or configuration which can achieve the desired result of accommodating an extruded or exuded part of workpiece 40.

In this embodiment it will be noted that it is not necessary or desirable to withdraw the die away from workpiece 40 during the riveting process in a head-forming step. That is to say the step shown in Figure 3 is omitted. This encourages material from sheet 40 to flow into groove 48.

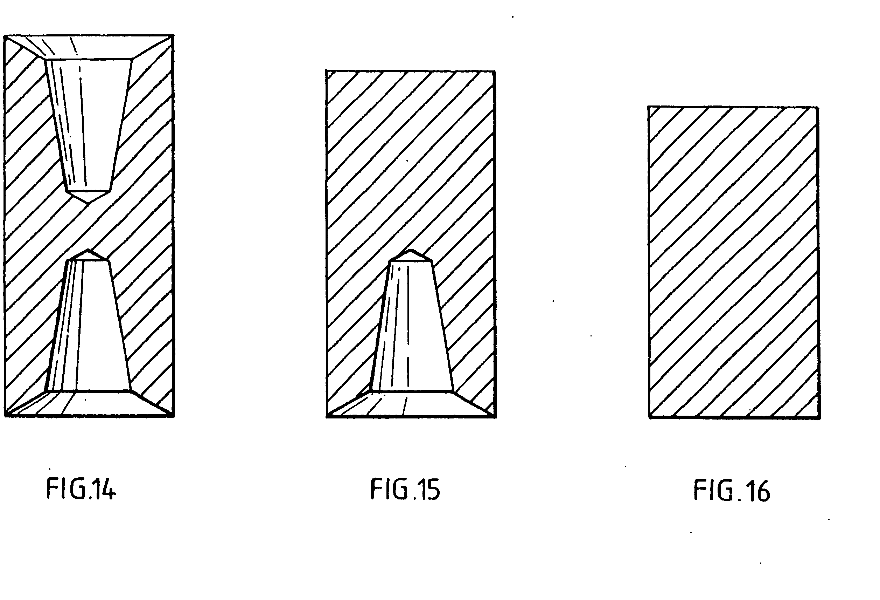

The examples so far described have utilised cylindrical slugs as rivets as shown in Figure 16. However the slug need not be circular cylindrical but could be any appropriate cross-section including square, rectangular or polygonal. Furthermore, the end of the rivet which pierces the workpiece can be semi-tubular in shape as shown in Figure 15. That is to say the end of the rivet can incorporate a bore with a tapered end to assist in the piercing of the workpiece and the ultimate deformation of the rivet on the anvil. Semi-tubular rivets provide easier penetration of sheets, improved splaying, and reduced distortion of the joint because there is less material displacement.

In a further improved modification both ends of the rivets can contain a bore as shown in Figure 14. Symmetrical semi-tubular rivets eliminate the need to orientate the rivet during presentation to the riveting head.

These methods and apparatus are equally applicable to the application of tubular slugs or rivets (not illustrated). In this case a further punch designed to be a tight sliding fit within the bore of the rivet will be required to support the rivet against internal collapse. The bore of the rivet may be threaded to receive a fastener or plug to support for example an electrical wiring loom or a plastic insert to form a flush cover over the joint.

These methods are applicable to a wide variety of materials and enable rivets to be constructed from materials otherwise considered too weak to be useful. Thus as well as metals, plastics materials and composites can be used as selected by the materials specialist.

The scope of this invention is intended to encompass the apparatus necessary to carry out these methods. The skilled addressee of this specification is directed to the prior art specifications for general details on self-piercing riveting techniques. It will be appreciated that changes and modifications may be made to the embodiments described and illustrated without departing from the scope of the present invention defined in the following claims.

## Claims

1. A method of self-piercing riveting comprising inserting a self-piercing rivet (15, 25, 35, 45) into a workpiece consisting of at least two layers (10, 11, 40, 41) of overlapping material such that the end of the rivet is deformed during the riveting process and remains encased in the material furthest from the point of impact of the rivet, **characterised in that** during at least the part of the riveting process when the rivet initially enters the workpiece, the sides of the rivet are constrained against radially outward deformation in the region where the rivet enters the workpiece.

2. A method according to Claim 1 wherein the constraint against radially outward deformation extends away from the workpiece for substantial the complete length of the rivet.

3. A method as daimed in Claim 1 or Claim 2 in which the constraint is removed after the rivet has at least partially entered the workpiece, thereby allowing radially outward deformation of a portion of the rivet to form a rivet head.

4. A method as daimed in Claim 3 in which the aforesaid rivet head is so formed that it does not substantial project above the surface of the workpiece.

5. A method as daimed in Claim 1 or Claim 2 in which the constraint against radially outward deformation is maintained in place until the rivet is entirely within the workpiece, such that the deformation of the rivet which inevitably takes place in such a riveting process results in radially outward deformation of a portion of the rivet to form a head within the layer of material first penetrated by the rivet.

6. A method as claimed in any preceding Claim wherein the rivet comprises a cylindrical slug of material, the sides of the cylinder being parallel along substantial the entire length of the rivet.

7. A method according to any preceding Claim wherein the rivet comprises a semi-tubular slug incorporating a bore with a tapered outer end at the end of the rivet intended to penetrate the workpiece.

8. A method according to Claim 7 wherein the rivet comprises a semi-tubular slug incorporating at both ends a bore with a tapered outer end, thus obviating the need to orientate the rivet with respect to the workpiece prior to deformation.

9. A method according to Claim 6 wherein the method comprises the additional step of forming rivets immediately prior to use by repeatedly cropping the tip off a length of wire.

10. A method as claimed in any preceding Claim wherein the constraint provides both a force resisting radially outward deformation of the rivet but also exerts a force P to clamp the workpiece in place.

11. Apparatus for effecting the method according to any of Claims 1 to 10 inclusive comprising:
(i) an anvil (12, 32, 42) having a generally annular cavity opening towards the workpiece and arranged, in use, to deform the rivet during the riveting process so that the rivet remains encased in the material of the workpiece furthest from the point of impact;
(ii) a die (13, 23, 33, 43) incorporating a channel (14, 24, 44) adapted to convey a rivet (15, 25, 35, 45) to the workpiece;
(iii) a punch (16, 26, 36, 46) adapted to drive the rivet into the workpiece;
(iv) constraining means adapted in use to prevent radially outward deformation of the rivet as the rivet enters the workpiece and comprising moveable heads (30, 31) adapted to encircle the shank of the rivet as it enters the workpiece, the heads being interposed between the die (33) and the workpiece and being moveable away from the shank.

12. Apparatus as claimed in Claim 11 wherein the sides of the channel in the die provide the desired constraint against radially outward deformation.

13. Apparatus as claimed in Claims 11 or 12 further comprising:
(v) a cropping mechanism adapted to form rivet slugs (25) by repeatedly cropping the end of a piece of wire (22).

14. Apparatus as claimed in any of Claims 11 to 13 inclusive wherein the anvil (12, 42) and the die (13, 23, 43) in combination are adapted to clamp the workpieces during the riveting process.

15. A riveted joint between at least two workpieces formed by a method according to Claims 1 to 10 inclusive.

16. A riveted joint as claimed in Claim 15 wherein the upper workpiece (10, 20, 40) is pierced by the self-piercing rivet and the bottom or lower most-in-use workpiece (11, 41) receives the end of the rivet and wherein the end of the rivet is splayed radially outwards.

## Patentansprüche

1. Verfahren zum selbstlochenden Nieten, das umfaßt, einen selbstlochenden Niet (15, 25, 35, 45) derart in ein Werkstück einzusetzen, das aus wenigstens zwei Schichten (10, 11, 40, 41) überlappenden Materials besteht, daß das Ende des Niets während des Nietvorgangs verformt wird und in dem am weitesten von dem Aufschlagpunkt des Niets entfernten Material ummantelt bleibt, **dadurch gekennzeichnet, daß** die Seiten des Niets in dem Bereich, in dem der Niet in das Werkstück eindringt, wenigstens während des Teils des Nietvorgangs, in dem der Niet zu Anfang in das Werkstück eindringt, gegen eine Verformung in Radialrichtung nach außen eingezwängt werden.

2. Verfahren nach Anspruch 1, bei dem sich die Einzwängung gegen eine Verformung in Radialrichtung nach außen von dem Werkstück weg über wesentlich die gesamte Länge des Niets erstreckt.

3. Verfahren nach Anspruch 1 oder Anspruch 2, bei dem die Einzwängung entfernt wird, nachdem der Niet wenigstens teilweise in das Werkstück eingedrungen ist, wodurch eine Verformung eines Abschnitts des Niets in Radialrichtung nach außen ermöglicht wird, um einen Nietkopf zu formen.

4. Verfahren nach Anspruch 3, bei dem der Nietkopf so geformt wird, daß er nicht wesentlich über die Oberfläche des Werkstücks vorsteht.

5. Verfahren nach Anspruch 1 oder Anspruch 2, bei dem die Einzwängung gegen eine Verformung in Radialrichtung nach außen an ihrem Platz beibehalten wird, bis sich der Niet vollständig innerhalb des Werkstücks befindet, so daß die Verformung des Niets, die bei einem solchen Nietvorgang unvermeidlich erfolgt, zu einer Verformung eines Abschnitts des Niets in Radialrichtung nach außen führt, um innerhalb der zuerst durch den Niet durchdrungenen Materialschicht einen Kopf zu formen.

6. Verfahren nach einem der vorhergehenden Ansprüche, bei dem der Niet einen zylindrischen Materialrohling umfaßt, wobei die Seiten des Zylinders längs wesentlich der gesamten Länge des Niets parallel sind.

7. Verfahren nach einem der vorhergehenden Ansprüche, bei dem der Niet einen Halbhohlrohling umfaßt, der an dem zum Durchdringen des Werkstücks vorgesehenen Ende des Niets eine Bohrung mit einem verjüngten äußeren Ende einschließt.

8. Verfahren nach Anspruch 7, bei dem der Niet einen Halbhohlrohling umfaßt, der an beiden Enden eine Bohrung mit einem verjüngten äußeren Ende einschließt und folglich die Notwendigkeit beseitigt, den Niet vor dem Verformen im Verhältnis zu dem Werkstück auszurichten.

9. Verfahren nach Anspruch 6, bei dem das Verfahren den zusätzlichen Schritt umfaßt, Nieten unmittelbar vor der Verwendung durch wiederholtes Abschneiden des Endes einer Drahtlänge herzustellen.

10. Verfahren nach einem der vorhergehenden Ansprüche, bei dem die Einzwängung sowohl eine Kraft bereitstellt, die einer Verformung des Niets in Radialrichtung nach außen widersteht, als auch eine Kraft P ausübt, um das Werkstück an seinem Platz festzuklemmen.

11. Vorrichtung zum Durchführen des Verfahrens nach einem der Ansprüche 1 bis einschließlich 10, die folgendes umfaßt:
(i) einen Amboß (12, 32, 42) mit einer allgemein ringförmigen Hohlraumöffnung zu dem Werkstück hin und bei Anwendung angeordnet, um den Niet während des Nietvorgangs zu verformen, so daß der Niet in dem am weitesten von dem Aufschlagpunkt des Niets entfernten Material ummantelt bleibt,
(ii) ein Gesenk (13, 23, 33, 43), das einen Kanal (14, 24, 44) einschließt, dafür geeignet, einen Niet (15, 25, 35, 45) zu dem Werkstück zu befördern,
(iii) einen Stempel (16, 26, 36, 46), dafür geeignet, den Niet in das Werkstück zu treiben,
(iv) Einzwängungsmittel, die dafür geeignet sind, bei Anwendung eine Verformung des Niets in Radialrichtung nach außen zu verhindern, wenn der Niet in das Werkstück eindringt, und bewegliche Köpfe (30, 31) umfassen, dafür geeignet, den Schaft des Niets zu umschließen, wenn er in das Werkstück eindringt, wobei die Köpfe zwischen dem Gesenk (33) und dem Werkstück angeordnet werden und von dem Schaft weg bewegt werden können.

12. Vorrichtung nach Anspruch 11, bei der die Seiten des Kanals in dem Gesenk die gewünschte Einzwängung gegen eine Verformung in Radialrichtung nach außen bereitstellen.

13. Vorrichtung nach Anspruch 11 oder 12, die außerdem umfaßt:
(v) einen Abschneidmechanismus, dafür geeignet, durch wiederholtes Abschneiden des Endes eines Drahtstücks (22) Nietrohlinge (25) herzustellen.

14. Vorrichtung nach einem der Ansprüche 11 bis einschließlich 13, bei welcher der Amboß (12, 42) und das Gesenk (13, 23, 43) in Verbindung dafür geeignet sind, die Werkstücke während des Nietvorgangs festzuklemmen.

15. Nietverbindung zwischen wenigstens zwei Werkstücken, hergestellt nach einem Verfahren nach Anspruch 1 bis einschließlich 10.

16. Nietverbindung nach Anspruch 15, bei der das obere Werkstück (10, 20, 40) durch den selbstlochenden Niet gelocht wird und das tiefste oder untere am meist gebrauchtes Werkstück (11, 41) das Ende des Niets aufnimmt, und bei der das Ende des Niets in Radialrichtung nach außen aufgeweitet wird.

## Revendications

1. Procédé de rivetage auto-taraudeur comprenant l'insertion d'un rivet auto-taraudeur (15, 25, 35, 45) dans une pièce d'oeuvre composée au moins de deux couches (10, 11, 40, 41) de matériau à chevauchement, de sorte que l'extrémité du rivet est déformée au cours du procédé de rivetage et reste encastré dans le matériau au niveau du point le plus éloigné de l'impact du rivet, **caractérisé en ce qu'**au cours d'au moins la partie du procédé de rivetage pendant laquelle le rivet rentre initialement dans la pièce d'oeuvre, les côtés du rivet sont retenus contre une déformation radiale vers l'extérieur dans la région où le rivet rentre dans la pièce d'oeuvre.

2. Procédé selon la revendication 1, dans lequel le moyen de retenue contre une déformation radiale vers l'extérieur s'étend à l'écart de la pièce d'oeuvre, sur pratiquement l'ensemble de la longueur du rivet.

3. Procédé selon les revendications 1 ou 2, dans lequel le moyen de retenue est retiré après l'entrée au moins partielle du rivet dans la pièce d'oeuvre, permettant ainsi une déformation radiale vers l'extérieur d'une partie du rivet, pour former une tête de rivet.

4. Procédé selon la revendication 3, dans lequel ladite tête de rivet est formée de sorte à ne pratiquement pas déborder au-dessus de la surface de la pièce d'oeuvre.

5. Procédé selon les revendications 1 ou 2, dans lequel le moyen de retenue contre une déformation radiale vers l'extérieur est retenu dans sa position jusqu'à l'entrée complète du rivet dans la pièce d'oeuvre, de sorte que la déformation du rivet, inévitable dans le cadre d'un tel procédé de rivetage, entraîne la déformation radiale vers l'extérieur d'une partie du rivet sous forme d'une tête dans la couche de matériau pénétrée en premier lieu par le rivet.

6. Procédé selon l'une quelconque des revendications précédentes, dans lequel le rivet comprend un noyau cylindrique de matériau, les deux côtés du cylindre étant parallèles le long de pratiquement l'ensemble de la longueur du rivet.

7. Procédé selon l'une quelconque des revendications précédentes, dans lequel le rivet comprend un noyau semi-tubulaire incorporant un alésage avec une extrémité externe effilée au niveau de l'extrémité du rivet destinée à pénétrer dans la pièce d'oeuvre.

8. Procédé selon la revendication 7, dans lequel le rivet comprend un noyau semi-tubulaire incorporant au niveau des deux extrémités un alésage avec une extrémité externe effilée, supprimant ainsi la nécessité d'orienter le rivet par rapport à la pièce d'oeuvre avant la déformation.

9. Procédé selon la revendication 6, dans lequel le procédé comprend l'étape additionnelle de formation des rivets immédiatement avant l'utilisation par éboutage répété de la pointe d'une longueur de fil métallique.

10. Procédé selon l'une quelconque des revendications précédentes, dans lequel le moyen de retenue fournit une force de résistance à une déformation radiale vers l'extérieur du rivet et exerce aussi une force P pour serrer la pièce d'oeuvre dans sa position.

11. Dispositif d'exécution du procédé selon l'une quelconque des revendications 1 à 10, comprenant :
(i) une enclume (12, 32, 42) comportant une cavité généralement annulaire s'ouvrant vers la pièce d'oeuvre et agencée en service de sorte à déformer le rivet au cours du procédé de rivetage, le rivet restant ainsi encastré dans le matériau de la pièce d'oeuvre au niveau du point le plus éloigné du point d'impact ;
(ii) une matrice (13, 23, 33, 43) incorporant un canal (14, 24, 44) destiné à transporter un rivet (15, 25, 35, 45) vers la pièce d'oeuvre;
(iii) un poinçon (16, 26, 36, 46) destiné à enfoncer le rivet dans la pièce d'oeuvre;
(iv) un moyen de retenue destiné à empêcher en service une déformation radiale vers l'extérieur du rivet lors de l'entrée du rivet dans la pièce d'oeuvre et comprenant des têtes mobiles (30, 31) destinées à entourer la tige du rivet lors de son entrée dans la pièce d'oeuvre, les têtes étant agencées entre la matrice (33) et la pièce d'oeuvre et pouvant être déplacées à l'écart de la tige.

12. Dispositif selon la revendication 11, dans lequel les côtés du canal dans la matrice assurent la retenue voulue contre une déformation radiale vers l'extérieur.

13. Dispositif selon les revendications 11 ou 12, comprenant en outre :
(v) un mécanisme d'éboutage destiné à former les noyaux des rivets (25) par éboutage répété de l'extrémité d'une pièce de fil métallique (22).

14. Dispositif selon l'une quelconque des revendications 11 à 13, dans lequel l'enclume (12, 42) et la matrice (13, 23, 43) sont destinées à assurer ensemble le serrage de la pièce d'oeuvre au cours du procédé de rivetage.

15. Assemblage riveté entre au moins deux pièces d'oeuvre, formé par un procédé selon les revendications 1 à 10.

16. Assemblage riveté selon la revendication 15, dans lequel la pièce d'oeuvre supérieure (10, 20, 40) est percée par le rivet auto-taraudeur, la pièce d'oeuvre inférieure ou la pièce d'oeuvre la plus basse la plus utilisée (11, 41) recevant l'extrémité du rivet, l'extrémité du rivet étant déployée radialement vers l'extérieur.
